# EUROPÄISCHE PATENTSCHRIFT

(11) **EP 2 143 681 B1**
(45) Veröffentlichungstag und Bekanntmachung des Hinweises auf die Patenterteilung: **22.02.2012**
(21) Anmeldenummer: 09164824.6
(22) Anmeldetag: 07.07.2009
(51) Int. Cl.: B65H 59/40, G01L 5/10

(54) **Fadenumlenkeinheit für eine Spulmaschine**
Yarn deflecting device for a winding machine
Dispositif de déviation de fil pour une bobineuse

(30) Priorität: 10.07.2008 DE 102008032643
(43) Veröffentlichungstag der Anmeldung: 13.01.2010
(73) Patentinhaber: GEORG SAHM GMBH & CO. KG, D-37269 Eschwege (DE)
(72) Erfinder: Degenhardt, Manfred, 37287, Wehretal-Langenhain (DE); Zaun, Jochen, 37269, Eschwege (DE)
(74) Vertreter: Rehberg Hüppe + Partner

(56) Entgegenhaltungen:
- EP-A- 1 656 317
- DE-A1- 3 236 942
- DE-A1- 4 041 142
- DE-U1- 29 713 328
- US-A- 5 277 072

## Beschreibung

### TECHNISCHES GEBIET DER ERFINDUNG

Die Erfindung betrifft eine Fadenumlenkeinheit für eine Spulmaschine zum Aufwickeln eines Spulguts auf einer Spulspindel gemäß dem Oberbegriff des Patentanspruchs 1.

### STAND DER TECHNIK

Zur Herstellung von Spulen wird ein zugeführtes Spulgut, insbesondere ein Faden, durch eine angetriebene Spulspindel auf eine Hülse aufgewickelt. Das Aufwickeln erfolgt unter gleichzeitiger axial zur Spulspindel ausgeführter changierender Bewegung des auflaufenden Spulguts durch eine Changiereinrichtung, wobei unterschiedliche Wicklungsarten wie beispielsweise eine Kreuzwicklung oder eine Parallelwicklung herstellbar sind. Während des Aufspulens ist die Spannung des Spulguts in einem bestimmten Bereich zu halten, der beispielsweise von den Materialeigenschaften und der Dicke des Spulguts abhängen kann und über die Spulreise veränderlich sein kann. Die richtige Spannung gewährleistet die Herstellung eines stabilen Spulenpakets und/oder eine Vermeidung einer Beschädigung des Spulguts durch übermäßige Beanspruchungen. Eine Regelung der Spannung in dem Spulgut kann durch Regelung des Drehmoments des Antriebs für die Spulspindel erfolgen, wobei bei einer zu niedrigen Spannung des Spulguts das Drehmoment erhöht wird, während für eine zu hohe Spannung des Spulguts das Drehmoment verringert wird.

DE 37 23 593 C1 beschreibt die Zufuhr eines als Faden ausgebildeten Spulguts zu der Spulspindel über eine Rolle, die drehbar in einem Endbereich eines sogenannten "Tänzerarms" gelagert ist. Der andere Endbereich des Tänzerarms ist gemeinsam mit einer Exzenterscheibe unter Beaufschlagung einer Feder drehbar gelagert. Eine Veränderung der Kraft oder Spannung in dem Faden führt zu einer automatischen Verdrehung von Tänzerarm und Exzenterscheibe. Zur Regelung des Antriebs der Spulspindel erfolgt eine Messung eines Abstands der Mantelfläche der nach Maßgabe der Spannung in dem Faden mit dem Tänzerarm verdrehten Exzenterscheibe durch einen ruhenden Abstandssensor. Eine Gestaltung und Auslegung der Regelung erfolgt derart, dass als Regelungsziel die Winkelstellung des Tänzerarms bzw. der Abstand der Exzenterscheibe von dem Abstandssensor möglichst konstant gehalten wird, was mit einer konstanten Spannung in dem Faden korreliert. Bei einer Veränderung der Spannung des Fadens bewegt sich der Tänzerarm in einer Ebene oder parallel zu einer Ebene, innerhalb welcher der Faden im Bereich der Fadenumlenkeinheit zugeführt und umgelenkt wird.

EP 1 656 317 B1 beschreibt eine weitere Ausführungsform mit einem Tänzerarm, für welche die Stellung des Tänzers für die Regelung der Drehzahl des Antriebs der Spulspindel verwendet wird. Als Ursache für Veränderungen der Spannung des Spulguts wird hier beschrieben, dass der Weg des Fadens unterschiedlich lang sein kann je nachdem, ob der Faden in der Mitte oder am Rand der Spulspindel angelegt wird.

EP 1 190 974 B1 offenbart eine Abstützung einer Rolle über einen biegesteifen Kragarm, welcher senkrecht zu einer abstützenden Grundplatte und der Ebene orientiert ist, in welcher der Faden der Rolle zugeführt und umgelenkt wird. Der Kragarm ist mit einem rohrartigen Gehäuse gebildet, in dem in einem Sollbiegebereich ein Biegebalken angeordnet ist, dessen Biegung durch einen Dehnungsmessstreifen (DMS) erfasst werden kann. Weiterhin in das Gehäuse integriert ist eine Auswerteelektronik für elektrische Signale des DMS. Aus dem Gehäuse herausgeführte Kabel übermitteln Ausgangssignale der Auswerteelektronik zu einer Regeleinrichtung für den Antrieb der Spulspindel.

Eine ähnliche Ausführungsform mit einer gegenüber einem Kragträger drehbar gelagerten Rolle und Dehnungsmessstreifen ist aus EP 1 656 317 B1 bekannt. Eine prinzipiell entsprechende Lösung zur Erfassung einer auf eine Rolle wirkenden Kraft aus einem anderen Technologiegebiet ist DE 34 08 497 A1 zu entnehmen.

In EP 1 656 317 B1 wird darauf hingewiesen, dass nicht ausgeregelte Variationen der Spannung eines Fadens dazu führen können, dass der aufgewickelte Faden von einem Rand der

Spulspindel herunterfällt und sich in weiterer Folge um den Kem der Spulspindel wickeln kann. Das unerwünschte Herunterfallen des Fadens kann während des Herstellungsvorgangs der Spule erfolgen und einen Stopp der Spulmaschine erfordern oder kann erst bei späterer Verwendung einer hergestellten Spule, beispielsweise beim Verweben des Fadens auftreten, was dann ebenfalls zu einem Maschinenstopp oder einer Beschädigung der Maschine führen kann. Weiterhin führt EP 1 656 317 B1 aus, dass insbesondere bei einer hohen Antriebsdrehzahl der Spulspindel unter Umständen die bekannten Regelungssysteme für den Antrieb nicht ausreichen, um schwankende Spannungen des Fadens zu vermeiden.

Schließlich widmet sich DE 32 36 942 A1 der Vermeidung von in der Druckschrift beschriebenen Nachteilen einer Steuerung unter Einsatz eines Tänzerarms, die in ständigen Änderungen der Fadenlänge gesehen werden. Zur Vermeidung dieser Nachteile schlägt DE 32 36 942 A1 vor, zunächst auf die Ausbildung der Fadenumlenkeinheit mit einer Rolle zu verzichten und stattdessen eine starre Mantelfläche aus einem Keramikmaterial als Gleitfläche zu nutzen. Diese Mantelfläche ist abgestützt über zwei Federblätter, die mittels einer Verspannung zusammengehalten werden, so dass diese gemeinsam eine Parallelfeder bilden. Die Federblätter sind mit Dehnungsmessstreifen versehen, die in Brückenschaltung angeordnet sind und deren Ausgangssignal von der Regelung eines Reibwalzenantriebsmotors der Spulmaschine ausgewertet wird. Eine Durchbiegung der Federblätter soll hierbei möglichst klein gehalten werden, aber die Auswertung über Dehnungsmessstreifen ermöglichen. Zur Verringerung der Durchbiegung wird vorgeschlagen, den Abstand der Federblätter der Parallelfeder möglichst groß zu halten, so dass sich ein großes Flächenträgheitsmoment der Parallelfeder ergibt. Die Blattfedern gemäß DE 32 36 942 A1 dienen somit dem alleinigen Zweck, ein Signal zu liefern, welches mit der Spannung in dem Spulgut korreliert. Gleichzeitig bringen aber die Blattfedern den unerwünschten Effekt mit sich bringen, dass sich je nach Spannung in dem Spulgut eine klein zu haftende Auslenkung ergibt. Die Dimensionierung der Blattfedern stellt somit ein Optimierungsproblem dar.

Als gattungsfremder Stand der Technik betrifft JP 20 03 317 345 eine Spannungserfassung bei der Förderung eines bandartigen Materials.

Aus dem nächstliegenden Stand der Technik DE 40 37 065 A1 ist eine Kraftmessvorrichtung bekannt, bei welcher ein Textilfaden über einen Gleitkontakt mit einer zylindrischen Spitze umgelenkt wird. Die zylindrische Spitze ist über einen Hebelarm an einem Federfußpunkt eines Federelements abgestützt, während der andere Federfußpunkt des Federelements an einem orts- und gehäusefesten Halteelement befestigt ist. Der Hebelarm soll hierbei biegesteif ausgebildet sein, wobei die konische Querschnittsgestaltung des Hebelarms dem linear von der zylindrischen Spitze zu dem Federelement anwachsenden wirkenden Biegemoment Rechnung tragen soll. Das Federelement ist als Biegebalken ausgebildet, dessen Ober- und Unterseite mit Miniatur-Dehnungsmessstreifen bestückt ist. Die Auslenkung der zylindrischen Spitze bei einer Veränderung der Spannung in dem Textilfaden ist abhängig ausschließlich von der Länge des Hebelarms und der Biegesteifigkeit des Federelements, wobei diese konstruktiv vorgebbaren Parameter entsprechend der Messcharakteristik der Miniatur-Dehnungsmessstreifen gewählt werden müssen. Die Druckschrift schlägt eine weitere Ausgestaltungsform vor, deren Aufbau dem zuvor geschilderten Aufbau der Kraftmessvorrichtung entspricht. Hierbei ist aber das Halteelement, an welchem ein Federfußpunkt des (hier ersten) Federelements abgestützt ist, von einer zunächst ebenfalls möglichst orts- oder gehäusefesten Verdickung gebildet, die zur Gewährleistung der orts- oder gehäusefesten Abstützung an einem Anschlag abgestützt ist, welcher durch eine Einstellschraube gebildet ist. Der Betrieb dieser modifizierten Kraftmessvorrichtung ist im "Normalbetrieb" gegenüber dem erstgenannten Ausführungsbeispiel unverändert, ohne dass die im Folgenden beschriebenen ergänzenden Bauelemente überhaupt die Wirkungsweise beeinflussen. Zur Gewährleistung einer zusätzlichen Überlastsicherung in einem "Überlastbetrieb" bei Überschreiten einer zu großen auf die Kraftmessvorrichtung einwirkenden Kraft des Textilfadens ist ein zweites Federelement, ebenfalls in Ausbildung als Biegebalken, mit einem Federfußpunkt an der Verdickung angebunden, während der andere Federfußpunkt des zweiten Federelements an einem orts-und gehäusefesten Halteelement angebunden ist. Das Halteelement, das zweite Federelement, die Verdickung, das erste Federelement und der konische Hebelarm erstrecken sich durch ein rohrartiges Gehäuseteil, welches in dem dem Halteelement gegenüberliegenden Endbereich bis auf eine Bohrung geschlossen ist, durch die die zylindrische Spitze hindurchtritt. Hierbei ist die Ausrichtung des Gehäuses gegenüber dem zweiten Federelement, der Verdickung, dem ersten Federelement, dem konischen Hebelarm und der Spitze derart, dass bei Beseitigung des Anschlags in Form der

Einstellschraube und ohne wirkende Kraft F des Textilfadens die Spitze nicht zentrisch zu der Bohrung angeordnet ist, sondern versetzt angeordnet ist mit einem Mittenversatz in eine Richtung entgegengesetzt zur Beaufschlagungsrichtung durch die Kraft F durch den Textilfaden im Betrieb der Kraftmessvorrichtung. Erst durch hinreichendes Einschrauben der Einstellschraube wird die Spitze in eine Arbeitsposition gebracht, welche offensichtlich mittig zur Bohrung angeordnet ist. Diese Position wird im "Normalbetrieb" unabhängig von der im Bereich der Spitze wirkenden Kraft F des Textilfadens eingehalten, da in dem vorgespannten Kontakt zwischen Einstellschraube und Verdickung eine Kraft wirkt, welche zu einer Durchbiegung des zweiten Federelements führt. Eine durch den Textilfaden auf die Spitze wirkende Kraft F wird zur Messung einer Spannung in dem Textilfaden durch die Miniatur-Dehnungsmessstreifen im Bereich des Federelements erfasst. Im "Normalbetrieb" in dem üblichen Messbereich der Dehnungsmessstreifen bilden die Verdickung, das zweite Federelement und das Halteelement eine starre Halteeinheit. Anders gesagt sind mit der Anbindung des Halteelements an das Gehäuse und der Anlage der Verdickung an der Einstellschraube zwei starre mechanische Randbedingungen dieser Halteeinheit vorgegeben. Mit einer Erhöhung der auf die Spitze wirkenden Kraft F in Folge des Textilfadens verringert sich die Kontaktkraft zwischen Einstellschraube und Verdickung. Konstruktiv ist die Kraftmessvorrichtung derart ausgelegt, dass die Kontaktkraft zwischen der Einstellschraube und der Verdickung auf Null gesunken ist, wenn die Kraft F die maximal zulässige Last für die Beaufschlagung der Dehnungsmessstreifen erreicht. Hiermit ist der übliche Betriebsbereich der Kraftmessvorrichtung verlassen. Nun tritt mit Überschreiten der Nennlast die Überlastsicherung ein, also ein Wechsel vom "Normalbetrieb" zum "Überlastbetrieb": Die Verdickung entfernt sich von der Einstellschraube, was möglichst umgehend zur Folge hat, dass sich die Spitze in Richtung der Beaufschlagung mit der Kraft F aus der Mitte der Bohrung bewegt und zur Anlage an die Begrenzung der Bohrung durch das Gehäuse kommt. Dies hat zur Folge, dass die Kraft F des Textilfadens nicht mehr vollständig auf die Dehnungsmessstreifen wirkt, sondern vielmehr weiterhin lediglich die Nennlast auf die Dehnungsmessstreifen wirkt, während die verbleibende Restkraft an dem Rand der Bohrung des Gehäuses abgestützt ist. Alternativ zum Einsatz einer einfachen zylindrischen Spitze für die Umlenkung des Textilfadens schlägt die Druckschrift den Einsatz eines verklebten Keramikröhrchens oder auch von Rollen als Fadenläufer an der Spitze vor.

DE 297 13 328 U1 beschreibt zunächst das Problem, das in Kraftmesseinrichtungen für ein Spulgut eine Durchbiegeung eines Biegebalkens zu einer Messwertverfälschung führen kann. Weiterhin hängt die Messgenauigkeit ab von der Exaktheit der Ausrichtung des Biegebalkens zur auf den Biegebalken einwirkenden Kraft des Spulguts. Dies Druckschrift schlägt vor, ein eine Rolle lagerndes Verbindungselement über zwei in mechanischer Parallelschaltung angeordnete Torsionsstäbe abzustützen, die bei fluchtender Anordnung zueinander parallel zur Rotationsebene der Rolle angeordnet sind. Diese Torsionsstäbe sind mit Dehnungsmessstreifen ausgestattet.

Die aus DE 40 37 065 A1 und DE 297 13 328 U1 bekannten Kraftmesseinrichtungen gewährleisten keine Bereitstellung einer Ausgleichsfunktion für eine Fadenlänge bei veränderter Spannung in dem Faden.

### AUFGABE DER ERFINDUNG

Der Erfindung liegt die Aufgabe zugrunde, eine Fadenumienkeinheit für eine Spulmaschine zum Aufwickeln eines Spulguts auf einer Spulspindel vorzuschlagen, die hinsichtlich
- der Erfassung einer Spannung in dem Spulgut,
- der Berücksichtigung von beim Aufwickeln des Spulguts auftretenden dynamischen Spannungsänderungen oder Spannungsspitzen,
- der Regelung des Antriebs für die Spulspindel und/oder
- des erforderlichen Bauraums
verbessert ist.

### LÖSUNG

Die Aufgabe der Erfindung wird erfindungsgemäß mit den Merkmalen des unabhängigen Patentanspruchs 1 gelöst. Weitere Ausgestaltungen der erfindungsgemäßen Lösung ergeben sich entsprechend den abhängigen Patentansprüchen 2 bis 12.

### BESCHREIBUNG DER ERFINDUNG

Der vorliegenden Erfindung liegt zunächst die Erkenntnis zugrunde, dass für aus dem Stand der Technik bekannte, auf einem Tänzerarm beruhende Fadenumlenkeinheiten den Nachteil haben, dass der Tänzerarm in der Ebene, in welcher der Faden umgelenkt wird, bei seiner Bewegung mit einer Veränderung der Spannung des Fadens eine große Fläche überdeckt, wodurch ein großer Bauraum erforderlich ist. Grob vereinfacht führt der Tänzerarm eine Bewegung wie ein Scheibenwischer in der genannten Ebene aus. Weiterhin muss der Tänzerarm zur Herbeiführung einer mittleren Spannung des Fadens vorgespannt sein, was durch exzentrisch wirkende Gewichtskräfte und/oder Federn erfolgen kann. Mit einer gegebenen Konstruktion eines Tänzerarms sind damit die Spannungsverhältnisse vorgegeben. Von Vorteil ist andererseits für derartige Ausbildungen mit Tänzerarm, dass für den Fall, dass trotz der Regelung des Antriebs der Spulspindel dynamische Spannungsänderungen auftreten (beispielsweise positive und negative Spannungsspitzen, wie sie beispielsweise an Umkehrpunkten der Changierbewegung auftreten können) der Tänzerarm entsprechend der dynamischen Spannungsänderung in Richtung seines Freiheitsgrads ausweichen kann. Diese Ausweichbewegung kann zu einer Verlängerung oder Verkürzung des Weges des Fadens zu der Spindel führen, so dass der Tänzerarm letztendlich eine Art "Speicher" darstellen kann, über welchen ergänzend zur Regelung dynamische Spannungsänderungen ausgeglichen werden können. Für die Regelung können hingegen diese "Speichermöglichkeiten" erhöhte Anforderungen bedingen.

Bezüglich der Messung der Spannung des Spulguts auf Basis eines mit Dehnungsmessstreifen ausgestatteten Kragträgers entsprechend EP 1 190 974 B1 hat die Erfindung erkannt, dass hier die Bauelemente der Fadenumlenkeinheit, die in der Ebene, in welcher das Umlenken des Spulguts erfolgt, im Wesentlichen auf die Rolle beschränkt sind, während sich der Kragträger quer zu dieser Ebene erstreckt. Somit ist der erforderliche Einbauraum für eine derartige Fadenumlenkeinheit verkleinert oder in eine andere Ebene verlagert. Allerdings bedingt der Einsatz des Dehnungsmessstreifens und der Aufbau als Kragträger, dass die durch eine Spannungsänderung des Spulguts hervorgerufene elastische Verformung lediglich Bruchteile von einem Millimeter betragen, während die Auslenkungen des Tänzerarms im Bereich mehrerer zehn Millimeter liegen können. Dies hat zur Folge, dass die zuvor erläuterte "Speichermöglichkeit" für Faden und eine Ausgleichsmöglichkeit für positive und negative Spannungsspitzen infolge einer elastischen Abstützung der Rolle für derartige Ausführungsformen mit einem Kragträger nicht gegeben sind. Ist diese Speicher- und Ausgleichsmöglichkeit ergänzend zur Erfassung der Spannung des Spulguts über den Kragträger mit DMS gewünscht, müsste für die aus dem Stand der Technik bekannten Ausführungsformen kumulativ der Einsatz eines Kragträgers mit DMS und eines Tänzerarms mit einer hierdurch bedingten doppelten Umlenkung des Spulguts und mit erhöhtem erforderlichem Einbauraum erfolgen.

Diesen Erkenntnissen trägt die vorliegende Erfindung dadurch Rechnung, dass eine kompakt bauende Fadenumlenkeinheit vorgeschlagen wird, bei welcher ein Sollbiegebereich mit dem Dehnungsmessstreifen und das Federelement in mechanischer Reihenschaltung angeordnet sind. Erfindungsgemäß können damit in einer Fadenumlenkeinheit die Funktionen gewährleistet werden, für welche gemäß dem Stand der Technik zwei entsprechende Einheiten, nämlich einerseits eine Umlenkeinheit mit einem Tänzerarm und andererseits eine Umlenkeinheit in Ausbildung mit einem Kragträger mit Dehnungsmessstreifen erforderlich waren:
- Über den Sollbiegebereich mit dem Dehnungsmessstreifen wird ein Signal erzeugt, welches Aufschluss über die Beaufschlagung der Rolle - und damit die Spannung des Spulguts - gibt. Dieses Signal kann dann einer Regelung für den Antrieb für die Spulspindel zugeführt werden. Die Dimensionierung des Sollbiegebereichs und der Dehnungsmessstreifen kann unabhängig davon erzeugt werden, welche Nachgiebigkeit die Fadenumlenkeinheit hinsichtlich Spannungsänderungen in dem Spulgut haben soll.
- Infolge der erfindungsgemäßen Reihenschaltung des Sollbiegebereichs mit dem Dehnungsmessstreifen und des Federelements kann über das Federelement eine gezielte Beeinflussung des federnden Verhaltens der Fadenumlenkeinheit, eine Erzeugung einer gewünschten "Speicherfunktion" oder "Ausgleichsfunktion" für eine bestimmte Fadenlänge für eine bestimmte Änderung der Spannung des Fadens konstruktiv vorgegeben werden.

Hierbei können die wirksamen Steifigkeiten des Sollbiegebereichs und des Federelements in gleichen oder unterschiedlichen Größenordnungen liegen. Für das erfindungsgemäße Federelement können beliebige Federelemente Einsatz finden mit beliebigen Materialien, beispielsweise einem elastischen Kunststoff, einem federnden Metall oder Ähnlichem. Darüber hinaus kann das Federelement beliebig konstruktiv ausgebildet sein, beispielsweise als Torsionsfeder, als Druck- und/oder Zugfeder und Ähnliches.

Während des Spulvorgangs können in dem Spulgut unerwünschte Spannungsspitzen auftreten. Beispielsweise kann während des Verlegevorgangs die benötigte Länge des Spulguts zwischen der letzten Umlenkrolle vor der Spule und der Spule in einer horizontalen Ebene in der Verlegemitte minimal sein und in Richtung der außen liegenden Umlenkpunkte immer größer werden. Bei unzureichender Regelung kann allein diese Vergrößerung der benötigten Länge des Spulguts zu einer Spannungsspitze in dem Spulgut führen. Im Idealfall kann die genannte Verlängerung durch eine bogenförmige Form eines Kompensationsbügels ausgeglichen werden. Allerdings erfolgt die Umkehrung der Changierbewegung in einem sogenannten Umkehrradius: Die beiden gegenläufigen Windungen der Kehrgewindewelle, die den Fadenführer führt, werden ineinander übergeleitet. Hierzu wird der Changierfadenführer in einer endlichen Beschleunigung verzögert und in die Gegenrichtung beschleunigt. Folge ist, dass in diesem Bereich auf der Spule die Steigung der Verlegespirale schnell auf Null abnimmt, so dass aber je Umdrehung weniger Faden benötigt wird, was dazu führt, dass die Fadenspannung einbricht. Eine etwaige Regelung kann u. U. derartige Veränderungen der Spannungen des Fadens aufgrund der Trägheit der Regelung nicht schnell genug ausgleichen. Andererseits ist häufig ein Signal zur Erfassung der Spannung in dem Spulgut oder einer Bewegung des Tänzerarms so stark verrauscht, dass dieses Signal durch einen Tiefpassfilter oder digital geglättet werden muss. Eine derartige Glättung hat aber wiederum zur Folge, dass die zuvor erläuterten schnellen Schwankungen der Spannung des Spulguts nicht erkannt werden können. Ohne Einsatz der erfindungsgemäßen Federelemente könnte die Spannung in dem Spulgut während der Spulreise temporär unerwünscht ansteigen. Durch Verwendung der erfindungsgemäßen Federelemente ist die Fadenumlenkeinheit u. U. in der Lage, gegenüber einer Fadenumlenkeinheit, die lediglich mit einem Kragträger und einem DMS ausgestattet ist, ein Vielfaches der Energie aufzunehmen, wodurch die Energie in dem Spulgut und damit die Spannung in dem Spulgut entsprechend verringert werden kann.

Für die aus DE 32 36 942 A1 (und auch aus der gattungsfremden Druckschrift JP 2003 317 345) bekannten Ausführungsformen sind der Sollbiegebereich und das Federelement zu einer Baueinheit zusammengefasst, so dass ein und dieselbe Feder als Sollbiegebereich und als Federelement dient. Während sich für diesen Stand der Technik der eingangs dargelegte Zielkonflikt ergibt, sind erfindungsgemäß der Sollbiegebereich einerseits und das Federelement andererseits separat ausgebildet. Hierdurch können beispielsweise unterschiedliche Materialien für den Sollbiegebereich und das Federelement Einsatz finden, wobei das Material für den Sollbiegebereich an die Anforderungen eines Dehnungsmessstreifens angepasst sein kann (beispielsweise hinsichtlich der Erzeugung einer definierten Verformung bei Belastung, einer Linearität der Abhängigkeit der Verformung von der Belastung). Weiterhin kann das Material des Sollbiegebereichs gesondert an die Befestigungsanforderungen für die Dehnungsmessstreifen angepasst sein. Schließlich kann die Steifigkeit und die Querschnittsgestaltung des Sollbiegebereichs gezielt an die Anforderungen der Dehnungsmessstreifen angepasst werden, ohne dass der zuvor dargelegte Zielkonflikt gegeben ist. Für die Erfüllung der weiteren Funktion, nämlich der Bereitstellung von Verformungswegen, die gemäß DE 32 36 942 A1 ausdrücklich unerwünscht sind, ist in funktionaler Trennung von dem Sollbiegebereich erfindungsgemäß das Federelement zuständig, dessen Geometrie und Steifigkeit sowie Material frei ohne zusätzliche Bedingungen infolge des Dehnungsmessstreifens gewählt und an die Anforderungen angepasst werden können.

Entsprechend einem weiteren Vorschlag der Erfindung sind das Federelement und der Sollbiegebereich mit dem Dehnungsmessstreifen koaxial zu der Rotationsachse der Rolle hintereinander liegend angeordnet. Damit können Federelement und Sollbiegebereich aus der Ebene der Rolle verlagert angeordnet sein, was günstig für die Gestaltung der Bauraumverhältnisse ist.

Eine besonders einfache Ausgestaltung der Fadenumlenkeinheit ist gegeben, wenn das Federelement mit einem Biegebalken gebildet ist. Derartige Biegebalken sind einfach herstellbar und als Massenware zu beziehen. Beispielsweise kann als Biegebalken ein abgeplatteter Federstahl, eine Blattfeder oder ein anderweitiges metallisches federndes Material eingesetzt werden.

Ebenfalls möglich ist entsprechend einem weiteren Vorschlag der Erfindung, dass das Federelement mit mehreren einzelnen, in Reihe oder parallel zueinander geschalteten Federteilelementen gebildet ist. Vorzugsweise handelt es sich bei dem Federelement um zwei ungefähr parallel zueinander angeordnete Biegebalken, die in mechanischer Parallelschaltung zueinander angeordnet sind. Für verhältnismäßig große Belastungen von Biegebalken kommt es zu einer Ausbildung einer Neigung des freien Endes des Biegebalkens, was für die erfindungsgemäße Ausgestaltung mit einer Verkippung der Rotationsachse der Rolle verbunden wäre, was zu einer verschlechterten Führung des Spulguts im Bereich der Rolle führen könnte. Ein derartiger unerwünschter Effekt kann dadurch zumindest gemindert werden, dass die zwei parallelen, das Federelement bildenden Biegebalken in der Art einer Parallelogrammführung für die Rolle ausgebildet sind. Hierunter wird insbesondere die Verbindung der freien Endbereiche der Blattfedern mit einer Achse der Rolle über einen quer zur Längsachse der Biegebalken orientierten Verbindungsschenkel verstanden, wobei der Verbindungsschenkel starr oder gelenkig an den Endbereichen der Biegebalken angelenkt ist.

Die Steifigkeit des Federelements kann in dem Arbeitsbereich der Fadenumlenkeinheit linear gestaltet sein. Ebenfalls möglich ist eine nichtlineare Gestaltung der Steifigkeit, wobei beispielsweise die Steifigkeit des Federelements mit zunehmender Beaufschlagung der Fadenumlenkeinheit mit zunehmender Spannung des Spulguts zunehmen kann. Für einen besonderen Vorschlag der Erfindung ist - bei grundsätzlich linearer oder nicht linearer Gestaltung der Federsteifigkeit - ein Anschlag vorgesehen, welcher die Verformung des Federelements begrenzt. Kommt es somit im Betrieb der Fadenumlenkeinheit zu Spannungsspitzen, können übermäßig große Verformungen des Federelements vermieden werden. Hierbei ist es von Vorteil, wenn die Wirksamkeit des Anschlags zusätzlich zu dem Kraftfluss über den Sollbiegebereich mit dem Dehnungsmessstreifen eine Art Kraft-Bypass bildet. Der Kraft-Bypass trägt dafür Sorge, dass die gesamte von der Fadenumlenkeinheit aufgenommene Kraft aufgeteilt wird auf eine Teilkraft, die den Sollbiegebereich mit dem Dehnungsmessstreifen beaufschlagt, und eine Teilkraft, die über den Kraft-Bypass an dem Sollbiegebereich vorbeigeführt wird. Hierdurch kann der Sollbiegebereich und der Dehnungsmessstreifen gegenüber einer übermäßigen Beanspruchung, die zu einer Beschädigung führen könnte, geschützt werden.

Wird der genannte "Kraft-Bypass" wirksam, erfasst der DMS nicht die vollständige wirkende Kraft und erzeugt damit kein mit der Spannung in dem Spulgut korrelierendes Ausgangssignal. Dies kann erkannt werden dadurch, dass das Ausgangssignal des DMS mit einem Schwellwert verglichen wird. Ein Überschreiten des Schwellwertes kann als Indiz gewertet werden, dass der Anschlag wirksam geworden ist. Ebenfalls möglich ist die unmittelbare Erfassung des Wirksamwerdens des Anschlages, beispielsweise über einen Abstands- oder Kontaktsensor. Wird die Wirksamkeit des Anschlags und des Kraft-Bypasses erkannt, kann die Regelung automatisch umgeschaltet werden, die Antriebsdrehzahl der Spulspindel um einen festen oder geregelten Betrag reduziert werden oder der Spulbetrieb unterbrochen werden unter Erzeugung eines Stopp- oder Warnsignals für das Bedienpersonal.

Für eine weitere Ausgestaltung der Erfindung sind das Federelement und der Sollbiegebereich mit dem Dehnungsmessstreifen zwischen zwei Verbindungselementen angeordnet. Das erste Verbindungselement kann der ortsfesten Befestigung der Fadenumlenkeinheit dienen, beispielsweise an einer Grundplatte entsprechend EP 1 190 974 B1. Hingegen dient das andere Verbindungselement der unmittelbaren oder mittelbaren Verbindung mit einer Achse der Rolle. Erfindungsgemäß trägt eines der Verbindungselemente ein Gehäuseteil, welches beispielsweise rohrförmig ausgebildet ist. Das Gehäuseteil erstreckt sich von diesem Verbindungselement über das Federelement und den Sollbiegebereich mit dem Dehnungsmessstreifen bis zu dem anderen Verbindungselement. Ein derartiges Gehäuseteil kann eine Schutzfunktion für das Federelement, den Sollbiegebereich und den Dehnungsmessstreifen mit den zugeordneten elektrischen Kabeln und ggf. eine Auswerteelektronik bilden. Darüber hinaus ist das Gehäuseteil multifunktional ausgebildet, da dieses zwischen dem Gehäuseteil oder etwaigen Anbauteilen und dem anderen Verbindungselement einen Spalt ausbildet. Die Höhe dieses Spalts verändert sich automatisch nach Maßgabe der Beanspruchung der Rolle durch das Spulgut. Mit Erreichen einer vorgegebenen maximalen Beanspruchung der Rolle durch das Spulgut wird die Höhe des Spalts auf Null reduziert, so dass das Gehäuseteil zur Anlage an das andere Verbindungselement kommt. Das Gehäuseteil und das andere Verbindungselement bilden somit in diesem Fall den zuvor erläuterten Anschlag zur Begrenzung der Verformung des Federelements und zur Schaffung des Kraft-Bypasses.

Eine weitere Funktion des Gehäuses kann erfindungsgemäß darin bestehen, dass in diesem eine elektrische Leitung für den Dehnungsmessstreifen und/oder eine Auswerteelektronik angeordnet ist, so dass auch diese empfindlichen Bauelemente durch das Gehäuse geschützt ist.

Weiterhin wird erfindungsgemäß vorgeschlagen, dass für eine weitere Funktion das Gehäuse oder Gehäuseteil in dem der Rolle zugewandten Endbereich einen Wickelschutz trägt, welcher ein Austreten des Spulguts aus der Rolle, schlimmstenfalls ein Eintreten des Spulguts in das Gehäuse, vermeiden soll.

Sofern eine unterschiedliche Steifigkeit des Federelements in unterschiedlichen Betriebsphasen der Spulmaschine, beispielsweise für unterschiedliche Spulgüter, Spulbewegungen, Spulspindeln gewünscht ist, schlägt die Erfindung vor, dass die Steifigkeit des Federelements einstellbar ist. Dies kann beispielsweise durch Ergänzung von zusätzlichen Federelementen zu einem vorhandenen Federelement oder Austausch des mindestens einen Federelements erfolgen. Ebenfalls möglich ist die Veränderung einer wirksamen Steifigkeit eines Federelements, indem bspw. ein Federfußpunkt, eine Wirkrichtung des Federelements in der Fadenumlenkeinheit oder eine Abstützbedingung des Federelements verändert wird.

Für eine Auslegung der Gesamtelastizität der Fadenumlenkeinheit hat es sich als vorteilhaft herausgestellt, wenn bei einer maximalen Kraft in dem Spulgut, die beispielsweise im Bereich von ca. 80 N +/- 20 N liegen kann, die Verschiebung der Rolle der Fadenumlenkeinheit zumindest 1 mm beträgt, vorzugsweise zwischen 3 mm und 4 mm liegt.

Weiterhin schlägt die Erfindung für eine weitere Ausgestaltung der Fadenumlenkeinheit vor, dass die Verformung des Federelements um eine Größenordnung größer ist als die Verformung des Sollbiegebereichs. Hier kann das Verhältnis des Beitrags zu der Bewegung der Rolle der Fadenumlenkeinheit von dem Federelement einerseits zu dem Sollbiegebereich andererseits größer als 10:1, insbesondere 30:1 bis 40:1, betragen. Ein derartiges Verhältnis hat sich als vorteilhaft einerseits für die Wirkungsweise, das Messsignal und die Genauigkeit des im Sollbiegebereich angeordneten Dehnungsmessstreifens und anderseits für die Bereitstellung ausreichender Verformungswege herausgestellt.

Es versteht sich, dass erfindungsgemäß ein oder mehrere Dehnungsmessstreifen Einsatz finden können. Die Art der Verschaltung eines oder mehrerer DMS miteinander und mit einer Auswerteelektronik sowie der Auswertung der Ausgangssignale mindestens eines Dehnungsmessstreifens ist dem Fachmann für Messtechnik an sich bekannt. Beispielsweise kann auch der Einsatz einer Wheatstone'schen Brückenschaltung erfolgen. Die Reihenfolge des Federelements und des Sollbiegebereichs mit dem Dehnungsmessstreifen in Richtung des Kraftflusses kann im Rahmen der vorliegenden Erfindung variiert werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine schematische Darstellung der Zufuhr eines fadenförmigen Spulguts, über eine erfindungsgemäße Fadenumlenkeinheit und eine Changiereinrichtung zu einer angetriebenen Spulspindel.
- **Fig. 2**: zeigt eine stark vereinfachte mechanische Prinzipskizze für eine erfindungs- gemäße Fadenumlenkeinheit.
- **Fig.3**: zeigt eine stark vereinfachte konstruktive Ausführungsform einer erfindungsgemäßen Fadenumlenkeinheit.
- **Fig.4**: zeigt eine stark vereinfachte konstruktive Ausgestaltung einer weiteren erfindungsgemäßen Fadenumlenkeinheit.
- **Fig. 5**: zeigt eine stark vereinfachte konstruktive Ausgestaltung einer weiteren erfindungsgemäßen Fadenumlenkeinheit.
- **Fig. 6**: zeigt einen Längsschnitt durch eine in größerem Detail konstruktiv ausgeführte weitere erfindungsgemäße Fadenumlenkeinheit.
- **Fig. 7**: zeigt einen Schnitt VII-VII durch die Fadenumlenkeinheit gemäß Fig. 6.
- **Fig. 8**: zeigt ein Blockschaltbild für eine Signalverarbeitung und Regelung des Antriebs einer Spulspindel unter Verwendung des Ausgangssignals eines Dehnungs- messstreifens einer erfindungsgemäßen Fadenumlenkeinheit.

### FIGURENBESCHREIBUNG

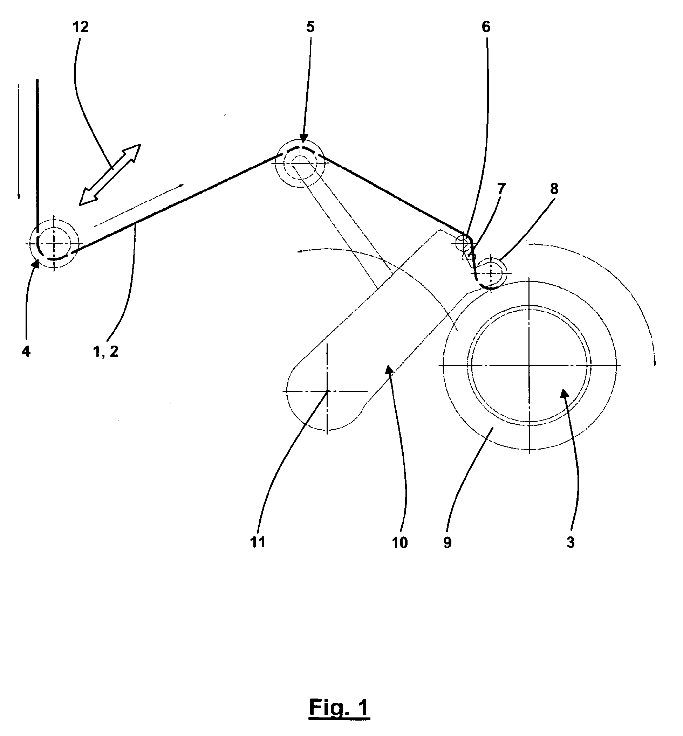

**Fig. 1** zeigt prinzipiell die Zuführung eines Spulguts 1, hier ein Faden 2 oder ein Bändchen, zu einer Spulspindel 3. Das Spulgut 1 wird hier in der folgenden Reihenfolge über eine Fadenumlenkeinheit 4, eine Umlenkrolle 5, einen Kompensationsbügel 6, einen Changierfadenführer 7 und eine Abdrückwalze 8 an die Mantelfläche der Wicklung einer Spule 9 auf der Spulspindel 3 angelegt. Hierbei verläuft der Faden 2 bis zur Umlenkrolle 5 im Wesentlichen in der Zeichenebene. Der Kompensationsbügel 6 dient einem Ausgleich ansonsten unterschiedlicher zurückzulegender Strecken des Fadens je nach Position des Changierfadenführers 7.

Umlenkrolle 5, Kompensationsbügel 6, Changierfadenführer 7 und Abdrückwalze 8 sind unter Gewährleistung der erforderlichen Freiheitsgrade sowie einem Antrieb der axialen Bewegung des Changierfadenführers von einem Leitapparat 10 getragen und mit diesem um eine Schwenkachse 11 verschwenkbar, wodurch eine Anpassung an unterschiedliche Dicken der Wicklung der Spule 9 während der Spulreise erfolgen kann. Hinsichtlich der grundsätzlichen Funktionsweise wird auf den eingangs genannten Stand der Technik, insbesondere EP 1 656 317 B1, verwiesen.

Die Fadenumlenkeinheit 4 besitzt einen elastischen Freiheitsgrad 12, der wie dargestellt ungefähr in Richtung der Winkelhalbierenden des Spulguts 1 im Einlaufbereich und Auslaufbereich der Fadenumlenkeinheit 4 orientiert ist. Je nach Kraft oder Spannung in dem Spulgut 1 erfolgt eine elastische Verformung der Fadenumlenkeinheit 4, die eine Bewegung entlang des Freiheitsgrads 12 zur Folge hat.

Die Fadenumlenkeinheit 4 erfüllt insbesondere die folgenden Funktionen:
- Umlenkung des Spulguts 1 zwischen dem Einlaufbereich und dem Auslaufbereich,
- Erfassung der Kraft- oder Spannung in dem Spulgut 1,
- Schaffung von Ausgleichsmöglichkeiten für die von dem Spulgut 1 zurückzulegende Strecke infolge einer Vergrößerung oder Verringerung der zurückzulegenden Strecke für Verformungen der Fadenumlenkeinheit 4 in Richtung des Freiheitsgrads 12.

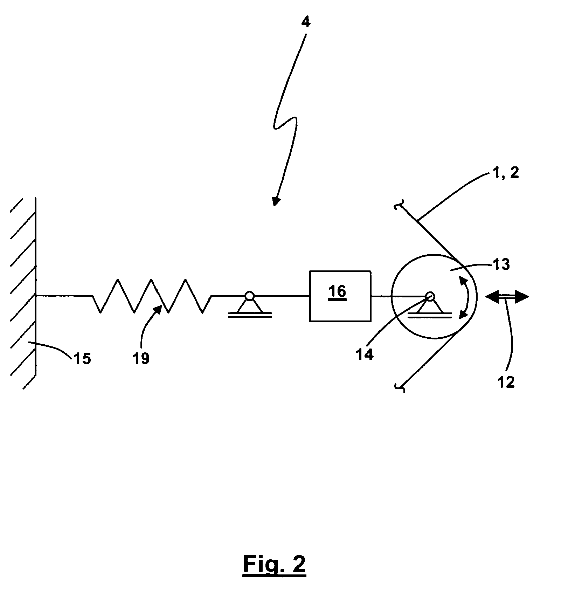

**Fig. 2** zeigt ein mechanisches Ersatzschaltbild für eine Fadenumlenkeinheit 4. Die Fadenumlenkeinheit 4 ist mit einer Rolle 13 gebildet, die in einem Gelenk 14 drehbar gelagert ist. An einem Teilumfang der Rolle 13 liegt das Spulgut 1 an der Rolle 13 an und wird über diese umgelenkt. Das unter Spannung stehende Spulgut 1 erzeugt eine in Fig. 2 nach links gerichtete Kraft auf die Rolle 13, deren Betrag und Orientierung von der Richtung des Spulguts 1 im Einlaufbereich und Auslaufbereich der Rolle 13 und dem Betrag der Spannung des Spulguts 1 abhängt. Die Rolle 13 ist in der Fadenumlenkeinheit 4 in Richtung des Freiheitsgrads 12 unter elastischer Verformung von Bestandteilen der Fadenumlenkeinheit 4 verschieblich gegenüber einer ortsfesten Abstützung der Fadenumlenkeinheit 4, beispielsweise an einer Abstützplatte 15. Die Abstützung an der Abstützplatte 15 erfolgt unter Zwischenschaltung einer Messeinheit 16, die mit einem Sollbiegebereich 17 und einem in diesem angebrachten Dehnungsmessstreifen 18 gebildet ist, und eines Federelements 19. Messeinheit 16 und Federelement 19 sind in mechanischer Reihenschaltung angeordnet.

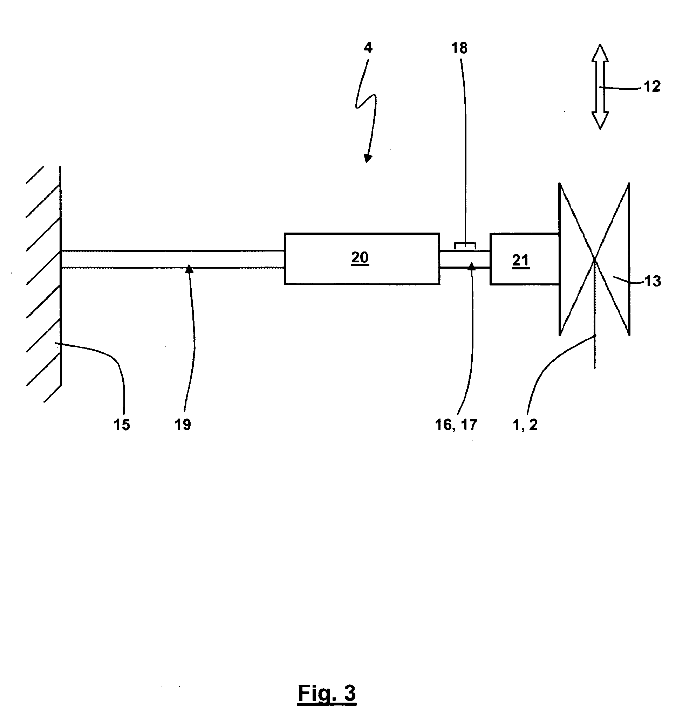

**Fig. 3** bis **Fig. 5** zeigen schematische Ausführungsformen von Fadenumlenkeinheiten 4:

Für das in **Fig. 3** dargestellte Ausführungsbeispiel ist das Federelement 19 als biegeelastischer Arm, Stab oder Balken ausgebildet, der zur Gewährleistung des Freiheitsgrads 12 in Figur 3 in vertikaler Richtung verformbar ist. Dem Federelement 19 ist in Richtung der Rolle 13 die Messeinheit 16 mit dem Sollbiegebereich 17 vorgeordnet. Die Verbindung zwischen Federelement 19 und Messeinheit 16 erfolgt über ein Verbindungselement 20, welches gegenüber dem Federelement 19 und der Messeinheit 16 mit dem Sollbiegebereich 17 eine vergrößerte Steifigkeit besitzt, insbesondere einen vergrößerten Querschnitt aufweist. Entsprechend erfolgt eine Verbindung der Rolle 13 mit dem Sollbiegebereich 17 über ein Verbindungselement 21. Der Sollbiegebereich 17 mit DMS 18 und das Federelement 19 sind seitlich der Ebene angeordnet, in der die Rolle 13 liegt und das Spulgut, insbesondere im Einlauf- und Auslaufbereich der Rolle 13, verläuft.

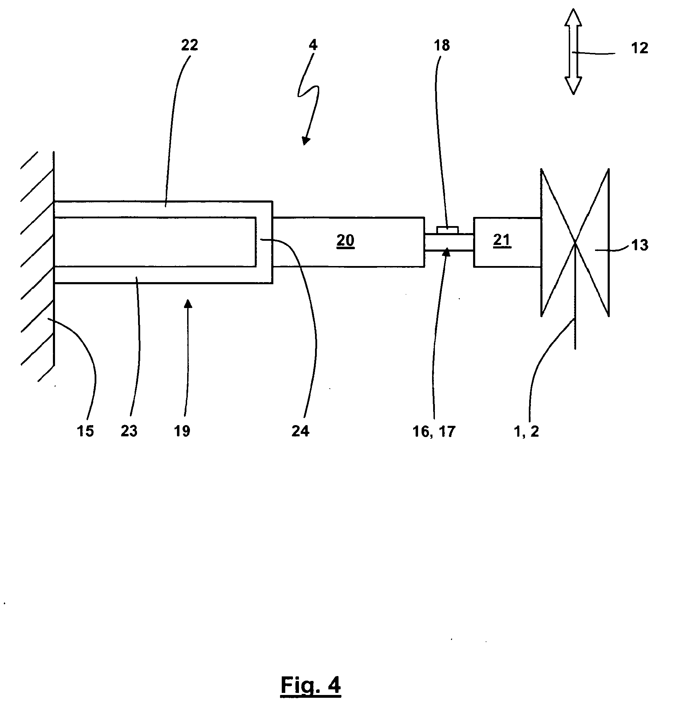

Bei ansonsten Fig. 3 entsprechender Ausgestaltung ist für das Ausführungsbeispiel gemäß **Fig. 4** das Federelement 19 mit zwei parallel zueinander orientierten Blattfedern, 22, 23 ausgebildet. Die Blattfedern 22, 23 erstrecken sich in einer Ebene, welche durch die Rotationsachse der Rolle 13 und den Freiheitsgrad 12 vorgegeben ist, mit einem Versatz zu der Ebene, in der die Rolle 13 liegt und das Spulgut, insbesondere im Einlauf- und Auslaufbereich der Rolle 13, verläuft. In einem Endbereich sind die Blattfedern 22, 23 ortsfest angebunden, insbesondere an der Abstützplatte 15. In dem gegenüberliegenden Endbereich sind die Blattfedern 22, 23 über ein Verbindungselement 24 miteinander verbunden. Das Verbindungselement ist parallel zum Freiheitsgrad 12 orientiert. Die Verbindung zwischen dem Verbindungselement 24 und den Blattfedern 22, 23 kann starr ausgebildet sein, beispielsweise einstückig durch Verschrauben oder stoffschlüssiges Anbinden, oder es kann eine gelenkige Verbindung geschaffen sein mit einer Schwenkachse, die vertikal zur Zeichenebene gemäß Fig. 4 ausgebildet ist.

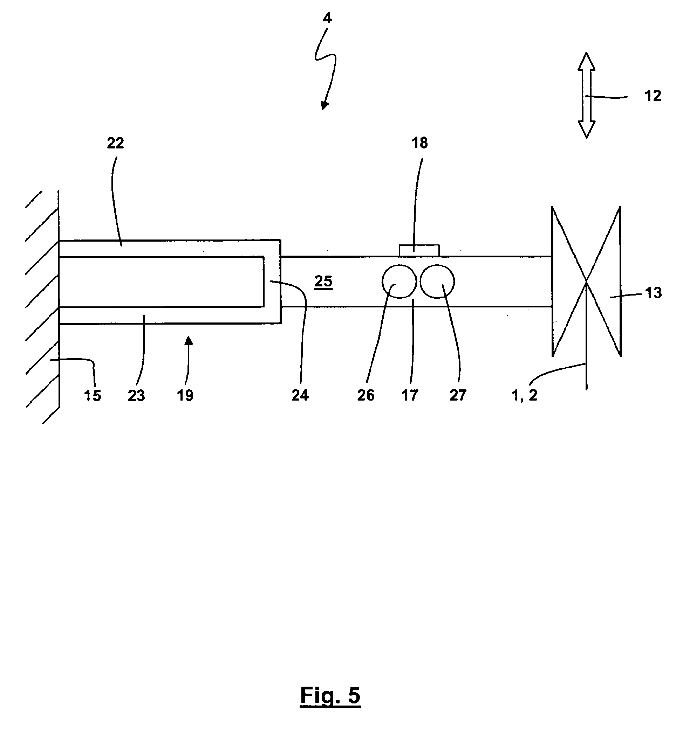

Das Verbindungselement 24 trägt für das Ausführungsbeispiel gemäß **Fig. 5** einen im Wesentlichen bis zur Rolle 13 mit konstantem Querschnitt ausgebildeten Träger 25. Eine Querschnittsschwächung des Trägers 25, in Fig. 5 zwei vertikal zur Zeichenebene orientierte, unmittelbar nebeneinander liegende Durchgangsbohrungen 26, 27, bildet den Sollbiegebereich 17. In einer Zug- oder Druckzone des Sollbiegebereichs 17 ist auf den Träger ein Dehnungsmessstreifen 18 aufgeklebt. Es versteht sich, dass auch mehrere Dehnungsmessstreifen 18, beispielsweise auf einer Oberseite sowie einer Unterseite des Trägers 25, eingesetzt sein können.

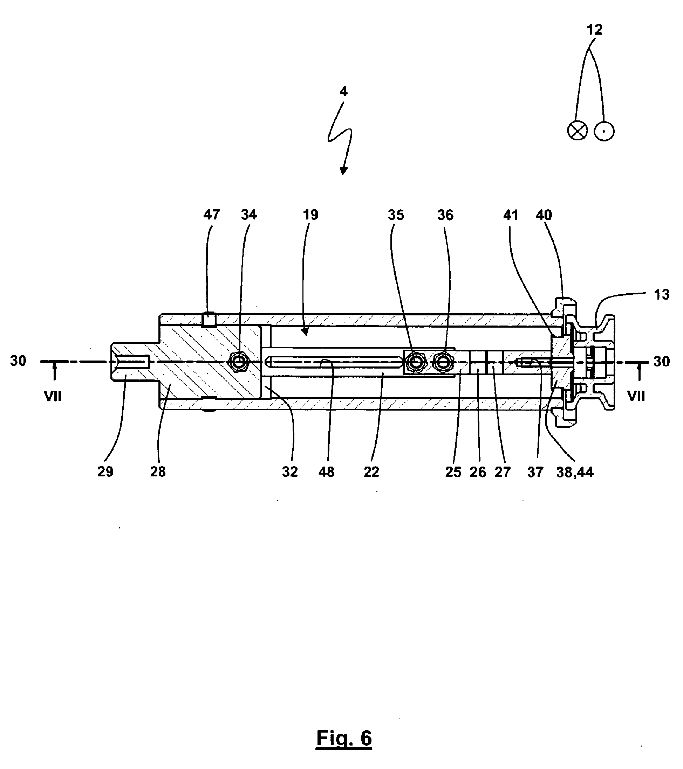

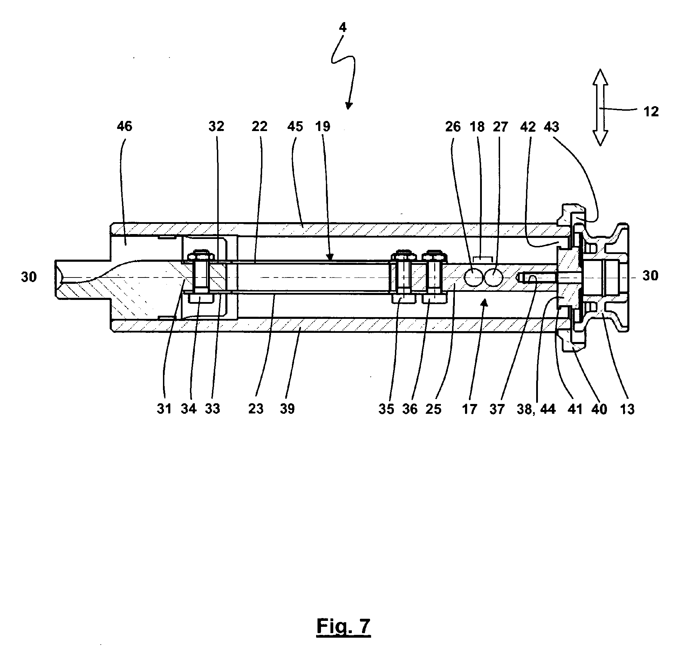

Für das in **Fig. 6** und **Fig. 7** dargestellte Ausführungsbeispiel besitzt die Fadenumlenkeinheit 4 ein Verbindungselement 28, welches zylindrisch ausgebildet ist und einen Fortsatz 29 mit einem nicht dargestellten Außengewinde besitzt, über den die Fadenumlenkeinheit 4 in eine Grundplatte der Spulmaschine einschraubbar ist. Das Verbindungselement 28 und Fortsatz 29 sind konzentrisch zu einer Längsachse 30-30 der Fadenführeinheit 4 angeordnet. Auf der der Rolle 13 zugewandten Seite besitzt das Verbindungselement 28 einen Fortsatz mit zwei parallelen und parallel zur Längsachse 30-30 sowie quer zu dem Freiheitsgrad 12 orientierten Abflachungen 32, 33. Fest mit den Abflachungen 32, 33 verbunden sind zwei parallele Blattfedern 22, 23, die sich parallel zur Längsachse 30-30 in Richtung der Rolle 13 erstrecken mit ungefähr rechteckförmigem Querschnitt, wobei die längere Seite des Rechtecks senkrecht zu dem Freiheitsgrad 12 orientiert ist. Für das dargestellte Ausführungsbeispiel sind die Blattfedern 22, 23 durch eine Schraube mit dem Fortsatz 31 verschraubt, die sich durch endseitige Bohrungen der Blattfedern 22, 23 sowie eine Durchgangsbohrung des Fortsatzes 31 erstreckt mit einer Längsachse der Schraube 34, die in Richtung des Freiheitsgrads 12 orientiert ist. In den gegenüberliegenden Endbereichen sind die Blattfedern 22, 23 mit einem sich ebenfalls koaxial zur Längsachse 30-30 erstreckenden Träger 25 fest verbunden, was gemäß dem dargestellten Ausführungsbeispiel durch zwei Schrauben 35, 36 erfolgt, die sich quer zur Längsachse 30-30 und in Richtung des Freiheitsgrads 12 durch Bohrungen der Blattfedern 22, 23 sowie Durchgangsbohrungen des Trägers 25 erstrecken. In dem dem Anbindungsbereich der Blattfedern 22, 23 gegenüberliegenden Endbereich des Trägers 25 besitzt dieser eine Gewindesacklochbohrung 37. Ein Anschlagkörper 38, der ungefähr scheibenförmig ausgebildet ist mit einer Symmetrieachse koaxial zur Längsachse 30-30, ist fest mit dem Träger 25 verbunden, für das dargestellte Ausführungsbeispiel durch eine Schraube, die sich durch eine zentrische Bohrung des Anschlagkörpers 38 in die Gewindesacklochbohrung 37 erstreckt. Drehbar gegenüber Träger und Anschlagkörper 38 gelagert ist die Rolle 13, beispielsweise unter Einsatz eines Wälzlagers oder eines Gleitlagers. Von dem Verbindungselement 28 getragen ist ein rohrförmiges Gehäuseteil 39, welches koaxial zur Längsachse 30-30 orientiert ist und sich von dem Verbindungselement 28 über die Blattfedern 22, 23 und den Sollbiegebereich 17 mit dem mindestens einen Dehnungsmessstreifen 18 erstreckt. In dem der Rolle 13 zugewandten Endbereich trägt das Gehäuseteil 39 einen Wickelschutz 40, der für das dargestellte Ausführungsbeispiel rotationssymmetrisch zur Längsachse 30-30 ausgebildet ist mit einem L-förmigen Halbschnitt. Ein Schenkel des L setzt die der Rolle zugewandte Stirnseite des Gehäuseteils 29 radial nach außen fort, während sich der andere Schenkel des L teilweise über die Rolle 13 erstreckt. Die Stirnseite des Gehäuseteils 39 und der zugeordnete Schenkel des L sind möglichst eng benachbart der Rolle 13 angeordnet. Der Wickelschutz 40 dient dazu, das Spulgut daran zu hindern, die Rolle 13 auf der dem Sollbiegebereich 17 zugewandten Seite zu verlassen und schlimmstenfalls in das Innere des Gehäuseteils 39 einzutreten. Der Anschlagkörper 38 besitzt auf seiner Mantelfläche einen radial nach außen vorstehenden Anschlag 41, der für das dargestellte Ausführungsbeispiel als Anschlagring ausgebildet ist und radial innen liegend von dem rohrförmigen Gehäuseteil 39 angeordnet ist unter Ausbildung eines Spalts 42.

Kommt es zu einer Verformung der Blattfedern 22, 23 sowie des Sollbiegebereichs 17, verringert sich die Höhe des Spalts 42, bis der Anschlag 41 zur Anlage an die innen liegende Mantelfläche des Gehäuseteils 32 kommt. Mit einem derartigen Kontakt vergrößert sich die Steifigkeit der Fadenumlenkeinheit 4 in Richtung des Freiheitsgrads 12 sprungartig, wobei für hinreichende Steifigkeit des Gehäuseteils 39 davon ausgegangen ist, dass für die Anlage des Anschlags 41 an die innen liegende Mantelfläche des Gehäuseteils 39 eine maximale Verformung vorgegeben ist. In jedem Fall ist die Höhe des Spalts 42 kleiner als die Höhe eines Spalts 43 zwischen dem Wickelschutz 40 und der Rolle 13 in radialer Richtung. Der Anschlagkörper 38 bildet ein Verbindungselement 44 zwischen Träger 25 und Rolle 13.

Mit dem Gehäuseteil 39 ist ein weitestgehend geschlossenes Gehäuse 45 gebildet, welches schützend die Blattfeder 22, 23, den Träger 25 mit dem Sollbiegebereich 17 und dem mindestens einen Dehnungsmessstreifen 18 und weitere Bestandteile wie beispielsweise eine Auswerteelektronik und elektrische Leitungsverbindungen aufnimmt. Elektrische Leitungsverbindungen können aus dem Inneren des Gehäuses 45 auf der der Rolle 13 abgewandten Seite der Fadenumlenkeinheit 4 aus dieser herausgeführt werden, wenn das Verbindungselement 28 mit dem Gehäuseteil 39 einen Längskanal 46, beispielsweise durch eine Abflachung oder Längsnut des Verbindungselements 28, ausbildet. Vorzugsweise besitzt das Gehäuse 45 lediglich eine labyrinthartige Öffnung zwischen der Stirnseite des Gehäuseteils 39 mit dem Wickelschutz 40 und der Rolle 13 sowie eine mit dem Längskanal 46 gebildete Öffnung.

Für das dargestellte Ausführungsbeispiel erfolgt eine feste Verbindung zwischen Verbindungselement 28 und Gehäuseteil 39 durch eine sich in radialer Richtung durch das Gehäuseteil 39 erstreckende und auf die Mantelfläche des Verbindungselements 28 drückende oder in eine entsprechende Aussparung oder Umfangsnut eintretende Madenschraube 47. Anderweitige feste Verbindungsmöglichkeiten wie beispielsweise ein Verkleben von Verbindungselement 28 und Gehäuseteil 39 sind ebenfalls möglich.

Im Betrieb der Fadenumlenkeinheit 4 wirkt auf die Fadenumlenkeinheit 4 eine Kraft, die der Resultierenden aus der Kraft in dem Spulgut 1, die einerseits im Einlaufbereich in die Rolle 13 und andererseits in dem Auslaufbereich aus der Rolle 13 wirkt, entspricht. Diese führt zu einer Ausbildung einer Biegelinie der Blattfedern 22, 23. In dem dem Verbindungselement 28 gegenüberliegenden Endbereich ergibt sich eine maximale Durchbiegung. Durch die Verwendung zweier Blattfedern 22, 23 anstelle eines Biegebalkens wird im Idealfall eine Neigung der durch die Blattfedern 22, 23 abgestützten Elemente vermieden, da beide Blattfedern 22, 23 zwar durchgebogen, aber weder gestaucht noch gedehnt werden. Es findet jedoch ein Versatz der Endbereiche der Blattfedern 22, 23 in Richtung des Freiheitsgrads 12 statt.

Darüber hinaus ergibt sich infolge der genannten Durchbiegung für den Träger 25 eine Neigung, die der Krümmung der Blattfedern 22, 23 in dem ausgelenkten Endbereich entspricht. Unter der vereinfachenden Annahme eines starren Trägers 25 mit starrem Sollbiegebereich 17 ergibt sich dann die Auslenkung der Rolle 13 in Richtung des Freiheitsgrads 12 aus einer Überlagerung der Durchbiegung der Blattfedern 22, 23 in dem Endbereich und der Auslenkung infolge der Neigungsänderung des Trägers 25, welche in erster Näherung dem Produkt
- aus der Neigung der Biegebalken in dem Endbereich
- mit der Länge des Trägers 25 und des Anschlagkörpers 28 sowie der halben Erstreckung der Rolle 13 in Richtung der Längsachse 30-30
entspricht. Hinzu kommt die ergänzende Durchbiegung des Sollbiegebereichs 17, deren Einfluss allerdings für eine verhältnismäßig steife Ausgestaltung des Sollbiegebereichs 17 auf die vorgenannten Abhängigkeiten von untergeordneter Bedeutung ist.

Eine Auslegung der Steifigkeiten und der Verformungen der Fadenumlenkeinheit 4 kann somit insbesondere durch Variation der folgenden Parameter erfolgen:
- Länge L der Blattfedern 22, 23
- Querschnitt der Blattfedern 22 bzw. Flächenträgheitsmodul der Blattfedern 22, insbesondere Abstand der Blattfedern 22, 23 von der Längsachse 30-30 und/oder
- Länge des Trägers 25 mit Längserstreckung des Anschlagkörpers 38.

In **Fig. 6** ist zu erkennen, dass auch eine Ausbildung der Blattfedern 22, 23 mit einem Langloch möglich ist. Ein derartiges Langloch kann zunächst für eine Reduzierung der Biegesteifigkeit der Blattfedern eingesetzt werden. Auch ist es möglich, über das Langloch 48 weitere, in den Figuren nicht dargestellte Federelemente oder Versteifungselemente mit den Blattfedern 22, 23 zu verschrauben, über die die Steifigkeit des Federelements 19 verändert werden kann.

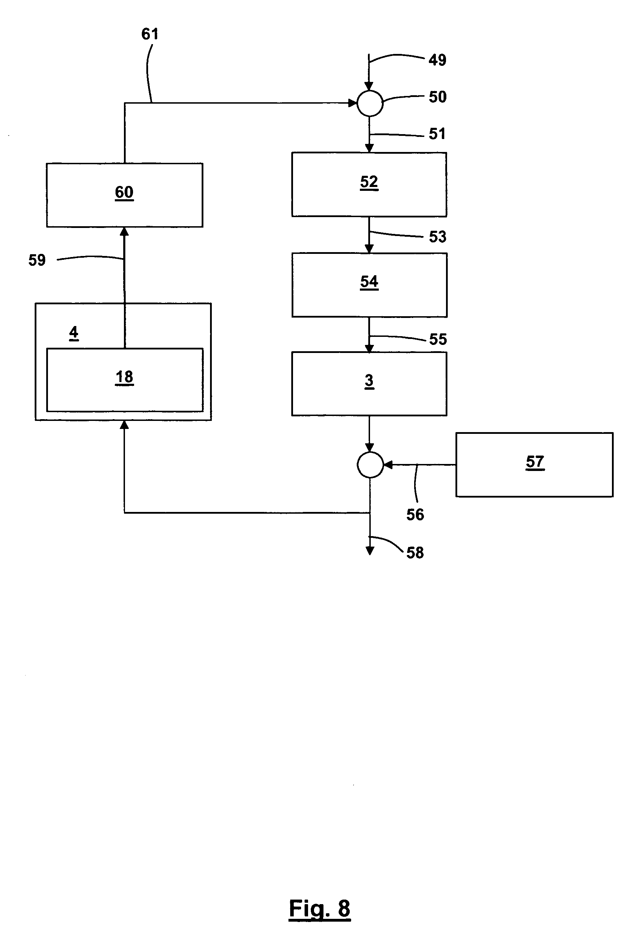

**Fig. 8** zeigt ein schematisches Blockschaltbild für den Aufbau einer Regelung für den Antrieb der Spulspindel 3:

Der Regelung wird zunächst ein Sollwert 49 für eine Spannung des Spulguts 1 bzw. des Fadens 2 zugeführt. Über den Rückführknoten 50 wird eine Regeldifferenz 51 einem Regelalgorithmus 52, beispielsweise einem PID-Regler, zugeführt. Der Reglerausgang 53 wird dem Antrieb 54, insbesondere dem elektrischen Antriebsaggregat oder einem zugeordneten Umrichter, unter geeigneter Umrechnung und Aufbereitung zugeführt, welcher dann je nach Regelungsart einen Antriebszustand 55, insbesondere die Drehzahl oder das Drehmoment für die Spulspindel 3, vorgibt. Störungen 56 können beispielsweise aus einem Vorprozess 57 zur Erzeugung oder Zuführung des Spulguts, insbesondere einem Herstellungsprozess in einem Extruder, einer Beschichtung oder Kräuselung des Spulguts 1, resultieren. Weitere Entstehungsursachen für Störungen können an der Spulspindel 3 beim Aufspulen des Spulguts 1 auftretende Effekten wie die Changierbewegung und etwaige Umkehrpunkte der Changierbewegung sein. Unter möglicher Einflussnahme dieser Störungen auf den Antriebszustand ergibt sich der Istwert 58 für die Spannung des Spulguts 1.

Der Istwert 58 der Spannung des Spulguts 1 wird erfasst durch die erfindungsgemäße Fadenumlenkeinheit 4, hier durch den Dehnungsmessstreifen 18, unter Erzeugung eines Ausgangssignals 59, welches unter Einsatz einer geeigneten Auswerteelektronik 60, die zumindest teilweise in oder außerhalb der Fadenumlenkeinheit 4 angeordnet sein kann, dem Rückführknoten 50 zugeführt wird. In dem Rückführknoten 50 wird aus der Differenz des Sollwerts 49 und dem Ausgangssignal 61 der Auswerteelektronik 60 die Regeldifferenz 51 bestimmt. Der Sollwert 49 kann über einen Algorithmus oder eine Speichereinheit vorgegeben sein oder über ein Kennfeld für unterschiedliche Spulvorgänge. Möglich sind beliebige konstante Sollwerte 49 oder beispielsweise über die Spulreise variierende Sollwerte 49.

Für elektrische Signalleitungen kann zunächst eine Verarbeitung in dem bewegten System erfolgen, beispielsweise indem eine Auswerteelektronik 60 in dem Träger 25 vorgesehen ist, so dass Leitungsverbindungen zwischen den Dehnungsmessstreifen 18 und der Auswerteelektronik 60 nicht bewegt sind. Für den Fall, dass Leitungsverbindungen zwischen Dehnungsmessstreifen 18 und Auswerteelektronik 60 und/oder Leitungsverbindungen, die aus der Fadenumlenkeinheit 4 herausführen, Relativbewegungen im Zuge einer Bewegung der Rolle 13 in Richtung des Freiheitsgrads 12 erfahren, kann einerseits eine an sich bekannte Kontaktierung eingesetzt werden, die derartige Relativverschiebungen ermöglicht. Eine besonders einfache Lösung ergibt sich, wenn hier elektrische Leitungsverbindungen eingesetzt werden, die flexibel sind, so dass durch eine Veränderung der Durchbiegung der Leitungsverbindungen die genannten Relativbewegungen ermöglicht sind.

Für die erfindungsgemäße Wirkungsweise ist es von Bedeutung, dass die Blattfedern 22, 23 und der Sollbiegebereich 17 mit den Dehnungsmessstreifen 18 in definierter Ausrichtung zu dem Freiheitsgrad 12 orientiert sind, so dass sich die gewünschte Durchbiegung in Richtung des Freiheitsgrads 12 ergibt und der Dehnungsmessstreifen 18 den Betrag der resultierenden der von dem Spulgut 1 auf die Rolle 13 ausgeübten Kräfte erfasst. Hierzu kann die Fadenumlenkeinheit 4 eine Kennzeichnung aufweisen, die die Winkelausrichtung um die Längsachse 30-30 kennzeichnet. Für die Befestigung der Fadenumlenkeinheit 4 kann ebenfalls dafür Sorge getragen werden, dass die Orientierung bei der Befestigung variabel ist oder bspw. durch einen Formschluss zwischen dem Zapfen 29 des Verbindungselements 28 lediglich eine Montage in einer Grundplatte mit der gewünschten Orientierung möglich ist.

Der Träger 25 ist zumindest in dem Sollbiegebereich 17 mit einer Aluminiumlegierung gebildet, die eine gute Verbindung mit Dehnungsmessstreifen ermöglicht. Einsatz finden kann eine Messbrücke, die als solche als "Katalogware" angeboten wird. Eine Auslegung der Fadenumlenkeinheit 4 kann derart erfolgen, dass die maximal zulässige Kraft der Messbrücke 80 N beträgt. Bei dieser Kraft kann die Auslenkung ohne Federelement 19 etwa 0,05 mm betragen, während diese mit Berücksichtigung der Elastizität der Federelemente 19 etwa 3,5 mm beträgt. Durch Einsatz der Federelemente verringert sich somit die wirksame Steifigkeit etwa um den Faktor 40.

### BEZUGSZEICHENLISTE

- 1: Spulgut
- 2: Faden
- 3: Spulspindel
- 4: Fadenumlenkeinheit
- 5: Umlenkrolle
- 6: Kompensationsbügel
- 7: Changierfadenführer
- 8: Abdrückwalze
- 9: Spule
- 10: Leitapparat
- 11: Schwenkachse
- 12: Freiheitsgrad
- 13: Rolle
- 14: Gelenk
- 15: Abstützplatte
- 16: Messeinheit
- 17: Sollbiegebereich
- 18: Dehnungsmessstreifen
- 19: Federelement
- 20: Verbindungselement
- 21: Verbindungselement
- 22: Blattfeder
- 23: Blattfeder
- 24: Verbindungselement
- 25: Träger
- 26: Durchgangsbohrung
- 27: Durchgangsbohrung
- 28: Verbindungselement
- 29: Fortsatz
- 30: Längsachse
- 31: Fortsatz
- 32: Abflachung
- 33: Abflachung
- 34: Schraube
- 35: Schraube
- 36: Schraube
- 37: Gewindesacklochbohrung
- 38: Anschlagkörper
- 39: Gehäuseteil
- 40: Wickelschutz
- 41: Anschlag
- 42: Spalt
- 43: Spalt
- 44: Verbindungselement
- 45: Gehäuse
- 46: Längskanal
- 47: Madenschraube
- 48: Langloch
- 49: Sollwert
- 50: Rückführknoten
- 51: Regeldifferenz
- 52: Regelagorithmus
- 53: Reglerausgang
- 54: Antrieb
- 55: Antriebszustand
- 56: Störung
- 57: Vorprozess
- 58: Istwert
- 59: Ausgangssignal
- 60: Auswerteelektronik
- 61: Ausgangssignal

## Patentansprüche

1. Fadenumlenkeinheit (4) für eine Spulmaschine zum Aufwickeln eines Spulguts (1) auf einer Spulspindel (3) mit
a) einer Rolle (13), über welche das Spulgut (1) umlenkbar ist,
b) einem Dehnungsmessstreifen (18) in einem Sollbiegebereich (17) zur Erfassung der Beaufschlagung der Rolle (13) durch das Spulgut (1),
c) einem Federelement (19),
d) wobei der Sollbiegebereich (17) separat von dem Federelement (19) ausgebildet ist,
**dadurch gekennzeichnet, dass**
e) über das Federelement (19) die Rolle (13) derart abgestützt ist, dass eine veränderte Spannung in dem Spulgut (1) und eine hierdurch veränderte von dem Spulgut (1) auf die Rolle (13) wirkende Kraft zu einer veränderten Beaufschlagung des Federelements (19) führt, wodurch eine Ausgleichsfunktion für eine bestimmte Fadenlänge für die veränderte Spannung in dem Spulgut (1) konstruktiv vorgegeben ist, wobei
f) der Sollbiegebereich (17) mit dem Dehnungsmessstreifen (18) und das Federelement (19) in mechanischer Reihenschaltung angeordnet sind.

2. Fadenumlenkeinheit (4) nach Anspruch 1, **dadurch gekennzeichnet, dass** das Federelement (19) und der Sollbiegebereich (17) koaxial zu der Rotationsachse (30-30) der Rolle (13) hintereinander liegend angeordnet sind.

3. Fadenumlenkeinheit (4) nach Anspruch 1 oder 2, **dadurch gekennzeichnet, dass** das Federelement (19) mit einem Biegebalken gebildet ist.

4. Fadenumlenkeinheit (4) nach Anspruch 3, **dadurch gekennzeichnet, dass** das Federelement (19) mit zwei parallelen Biegebalken (22, 23) gebildet ist, die eine Art Parallelogrammführung für die Rolle (13) bilden.

5. Fadenumlenkeinheit (4) nach einem der vorhergehenden Ansprüche, **dadurch gekennzeichnet, dass** ein Anschlag (41) vorgesehen ist, der die Verformung des Federelements (19), insbesondere die Durchbiegung des Biegebalkens oder der Biegebalken (22, 23), begrenzt.

6. Fadenumlenkeinheit (4) nach Anspruch 5, **dadurch gekennzeichnet, dass**
a) das Federelement (19) und der Sollbiegebereich (17) mit dem Dehnungsmessstreifen (18) zwischen zwei Verbindungselementen (28; 44) angeordnet sind,
b) ein Verbindungselement (28) ein Gehäuseteil (39) trägt, welches sich von diesem Verbindungselement (28) über das Federelement (19) und den Sollbiegebereich (17) mit dem Dehnungsmessstreifen (18) bis zu dem anderen Verbindungselement (44) erstreckt,
c) wobei zwischen dem Gehäuseteil (39) und dem anderen Verbindungselement (44) ein Spalt (42) ausgebildet ist, dessen Höhe nach Maßgabe der Beanspruchung der Rolle (13) durch das Spulgut (1) veränderbar ist, und
d) wobei zur Begrenzung der Verformung des Federelements (19) die Höhe des Spaltes (42) für eine vorgegebene Beanspruchung der Rolle (13) durch das Spulgut (1) auf Null reduziert ist, womit der Anschlag (41) zusätzlich an dem Gehäuseteil (39) abgestützt wird.

7. Fadenumlenkeinheit (4) nach einem der vorhergehenden Ansprüche, **dadurch gekennzeichnet, dass** der Dehnungsmessstreifen (18) in einem weitestgehend geschlossenen Gehäuse (45) angeordnet ist.

8. Fadenumlenkeinheit (4) nach Anspruch 7, **dadurch gekennzeichnet, dass** eine elektrische Leitung für den Dehnungsmessstreifen (18) innerhalb des Gehäuses (45) angeordnet ist.

9. Fadenumlenkeinheit (4) nach einem der Ansprüche 6 bis 8, **dadurch gekennzeichnet, dass** das Gehäuse (45) oder Gehäuseteil (39) in dem der Rolle (13) zugewandten Endbereich einen Wickelschutz (40) trägt.

10. Fadenumlenkeinheit (4) nach einem der vorhergehenden Ansprüche, **dadurch gekennzeichnet, dass** die Steifigkeit des Federelements (19) einstellbar ist.

11. Fadenumlenkeinheit (4) nach einem der vorhergehenden Ansprüche, **dadurch gekennzeichnet, dass** der Gesamtweg der Rolle (13) infolge der Verformung des Federelements (19) und des Sollbiegebereichs (17) bei maximaler Beanspruchung des Spulguts (1), insbesondere bei einer Kraft in dem Spulgut (1) von ca. 80 N +/- 20 N, größer ist als 1 mm, insbesondere größer ist als 3 mm bis 4 mm.

12. Fadenumlenkeinheit (4) nach einem der vorhergehenden Ansprüche, **dadurch gekennzeichnet, dass** das Verhältnis des Beitrags des Federelements (19) zur Bewegung der Rolle (13) zu dem Beitrags des Sollbiegebereichs (17) zur Bewegung der Rolle größer ist als 10:1, insbesondere größer ist als 30:1 oder 40:1.

## Claims

1. Yarn or thread deflecting unit (4) for a winding machine for winding a winding material (1) on a spindle (3) with
a) a roller (13) for deflecting the winding material (1),
b) a strain gauge (18) with a predetermined bending region (17) for sensing an actuation of the roller (13) by the winding material (1),
c) a spring element (19),
d) wherein the predetermined bending region (17) is built separately from the spring element (19),
**characterized by**
e) the roller (13) being supported by the spring element (19) such that a changed tension of the winding material (1) and a resulting changed force applied by the winding material upon the roller (13) results in a changed actuation of the spring element (19) with the result that by means of these constructive measures a balancing function for a predetermined length of the thread or yarn is provided for the changed tension in the winding material (1), wherein
f) the predetermined bending region (17) with the strain gauge (18) and the spring element (19) are located in a mechanical serial arrangement.

2. Yarn or thread deflecting unit (4) of claim 1, wherein the spring element (19) and the predetermined bending region (17) are arranged coaxially to the axis of rotation (30-30) of the roller (13) one behind another.

3. Thread or yarn deflecting unit (4) of claim 1 or 2, wherein the spring element (19) is built with a bending beam.

4. Thread or yarn deflecting unit (4) of claim 3, wherein the spring element (19) is built by two parallel bending beams (22, 23) building a kind of rhomboid guidance for the roller (13).

5. Thread or yarn deflecting unit (4) of one of the preceding claims, wherein a stop or abutting element (41) is provided for limiting a deformation of the spring element (19), in particular a bending deflection of a bending beam or the bending beams (22, 23).

6. Thread or yarn deflecting unit (4) of claim 5, wherein
a) the spring element (19) and the predetermined bending region (17) with the strain gauge (18) are positioned between two connecting elements (28; 44),
b) a connecting element (28) supports a part (39) of a housing which extends from said connecting element (28) over the spring element (19) and the predetermined bending region (17) with the strain gauge (18) to the other connecting element (44),
c) wherein a gap (42) is built between the part (39) of the housing and the other connecting element (44), wherein the height of the gap (42) changes in dependence on the actuation of the roller (13) by the winding material (1), and
d) wherein for limiting the deformation of the spring element (19) the height of the gap (42) for a predetermined actuation of the roller (13) by the winding material (1) is reduced to zero, such that the stop or abutting element (41) is additionally supported at the part (39) of the housing.

7. Thread or yarn deflecting unit (4) of one of claims 1 to 6, wherein the strain gauge (18) is located in a to a far extent or as far as possible closed housing (45).

8. Thread or yarn deflecting unit (4) of claim 7, wherein an electrical line for the strain gauge (18) is located within the housing (45).

9. Thread or yarn deflecting unit (4) of one of claims 6 to 8, wherein the housing (45) or the part (39) of the housing at the end region facing towards the roller (13) supports or holds a winding protection (40).

10. Thread or yarn deflecting unit (4) of one of claims 1 to 9, wherein the stiffness of the spring element (19) is adjustable.

11. Thread or yarn deflecting unit (4) of one of claims 1 to 10, wherein at the maximum of the actuation of the winding material (1), in particular at a force in the winding material (1) of approximately 80 N +/- 20 N, the overall path of the roller (13) due to a deformation of the spring element (19) and the predetermined bending region (17) is larger than 1 mm, in particular larger than 3 mm to 4 mm.

12. Thread or yarn deflecting unit (4) of one of claims 1 to 11, wherein the relation of the component of the spring element (19) of the movement of the roller (13) to the component of the predetermined bending region (17) of the movement of the roller is larger than 10:1, in particular larger than 30:1 or 40:1.

## Revendications

1. Unité guide-fil (4) pour une bobineuse destinée à enrouler un fil (1) sur un axe de canette (3), comportant
a) une poulie (13) permettant de guider le fil à enrouler (1),
b) une jauge de contrainte (18) dans une zone destinée à la flexion (17), pour détecter la sollicitation de la poulie (13) par le fil à enrouler (1),
c) un élément de ressort (19),
d) la zone destinée à la flexion (17) étant réalisée séparément de l'élément de ressort (19),
**caractérisée en ce que**
e) par l'intermédiaire de l'élément de ressort (19), la poulie (13) est en appui de telle sorte qu'une variation de la tension dans le fil à enrouler (1) et une force, modifiée de ce fait et exercée par le fil à enrouler (1) sur la poulie (13), génèrent une variation de la sollicitation appliquée sur l'élément de ressort (19), moyennant quoi une fonction d'équilibrage pour une longueur de fil déterminée pour la tension modifiée dans le fil à enrouler (1) est prédéfinie par la construction,
f) la zone destinée à la flexion (17) étant agencée, conjointement avec la jauge de contrainte (18) et l'élément de ressort (19), dans un montage en série mécanique.

2. Unité guide-fil (4) selon la revendication 1, **caractérisée en ce que** l'élément de ressort (19) et la zone destinée à la flexion (17) sont disposés l'un derrière l'autre coaxialement à l'axe de rotation (30-30) de la poulie (13).

3. Unité guide-fil (4) selon la revendication 1 ou 2, **caractérisé en ce que** l'élément de ressort (19) est formé avec une barre de flexion.

4. Unité guide-fil (4) selon la revendication 3, **caractérisée en ce que** l'élément de ressort (19) est formé avec deux barres de flexion (22, 23) parallèles, qui forment une sorte de parallélogramme de guidage pour la poulie (13).

5. Unité guide-fil (4) selon l'une quelconque des revendications précédentes, **caractérisée en ce qu'**il est prévu une butée (41), qui limite la déformation de l'élément de ressort (19), en particulier le fléchissement de la barre de flexion ou des barres de flexion (22, 23).

6. Unité guide-fil (4) selon la revendication 5, **caractérisée en ce que**
a) l'élément de ressort (19) et la zone destinée à la flexion (17) avec la jauge de contrainte (18) sont agencés entre deux éléments de jonction (28 ; 44),
b) un élément de jonction (28) porte une partie de boîtier (39) qui s'étend depuis ledit élément de jonction (28) jusqu'à l'autre élément de jonction (44) en passant par l'élément de ressort (19) et la zone destinée à la flexion (17) avec la jauge de contrainte (18),
c) entre la partie de boîtier (39) et l'autre élément de jonction (44) se forme une fente (42), dont la hauteur est variable en fonction de la sollicitation exercée par le fil à enrouler (1) sur la poulie (13),
d) pour limiter la déformation de l'élément de ressort (19), la hauteur de la fente (42) peut être réduite à zéro pour une sollicitation prédéfinie exercée par le fil à enrouler (1) sur la poulie (13), la butée (41) venant en appui, en plus, sur la partie de boîtier (39).

7. Unité guide-fil (4) selon l'une quelconque des revendications précédentes, **caractérisée en ce que** la jauge de contrainte (18) est agencée dans un boîtier (45) fermé en majeure partie.

8. Unité guide-fil (4) selon la revendication 7, **caractérisée en ce qu'**une ligne électrique pour la jauge de contrainte (18) est agencée à l'intérieur du boîtier (45).

9. Unité guide-fil (4) selon l'une quelconque des revendications 6 à 8, **caractérisée en ce que** le boîtier (45) ou la partie de boîtier (39) porte une protection de bobinage (40) dans la zone d'extrémité orientée vers la poulie (13).

10. Unité guide-fil (4) selon l'une quelconque des revendications précédentes, **caractérisée en ce que** la rigidité de l'élément de ressort (19) est réglable.

11. Unité guide-fil (4) selon l'une quelconque des revendications précédentes, **caractérisée en ce que** la trajectoire totale de la poulie (13), par suite de la déformation de l'élément de ressort (19) et de la zone destinée à la flexion (17) en présence d'une sollicitation maximale du fil à enrouler (1), en particulier en présence d'une force de 80 N +/- 20 N dans le fil à enrouler (1), est supérieure à 1 mm, en particulier supérieure à 3 mm jusqu'à 4 mm.

12. Unité guide-fil (4) selon l'une quelconque des revendications précédentes, **caractérisée en ce que** le rapport de la contribution de l'élément de ressort (19) au mouvement de la poulie (13) et de la contribution de la zone destinée à la flexion (17) au mouvement de la poulie est supérieur à 10:1, en particulier est supérieur à 30:1 ou 40:1.
